(19) Europäisches Patentamt
European Patent Office
Office européen des brevets

(11) **EP 3 805 332 A1**

(12) **EUROPEAN PATENT APPLICATION**
published in accordance with Art. 153(4) EPC

(43) Date of publication:
**14.04.2021 Bulletin 2021/15**

(21) Application number: **19811837.4**

(22) Date of filing: **28.05.2019**

(51) Int Cl.:
*C09J 7/38* (2018.01)      *B32B 7/06* (2019.01)
*B32B 27/00* (2006.01)     *C09J 7/00* (2018.01)
*C09J 7/40* (2018.01)      *C09J 11/06* (2006.01)
*C09J 109/00* (2006.01)    *C09J 133/00* (2006.01)
*C09J 201/00* (2006.01)

(86) International application number:
**PCT/JP2019/020991**

(87) International publication number:
**WO 2019/230678 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.05.2018 JP 2018102822
27.05.2019 JP 2019098481**

(71) Applicant: **NITTO DENKO CORPORATION
Ibaraki-shi
Osaka 567-8680 (JP)**

(72) Inventors:
• **KIRA, Yoshiko**
  **Ibaraki-shi, Osaka 567-8680 (JP)**
• **TANI, Kensuke**
  **Ibaraki-shi, Osaka 567-8680 (JP)**
• **YASU0I, Atsushi**
  **Ibaraki-shi, Osaka 567-8680 (JP)**

(74) Representative: **Müller-Boré & Partner
Patentanwälte PartG mbB
Friedenheimer Brücke 21
80639 München (DE)**

(54) **ADHESIVE SHEET**

(57) The present invention relates to an adhesive sheet including an adhesive layer comprising an adhesive composition containing a base polymer and a moisture-curable component, wherein an adhesive surface is peelably covered with a layer having moisture permeability of 5 g/m$^2$·24 hrs or less.

Fig. 1

**Description**

TECHNICAL FIELD

The present invention relates to an adhesive sheet.

BACKGROUND ART

Conventionally, a moisture-curable adhesive and an adhesive sheet using the moisture-curable adhesive are known in adhesive fixation in various fields from that those have both high initial adhesive force and sufficient adhesive force with time.

For example, Patent Literature 1 describes a photopolymerizable composition which can provide a moisture-curable adhesive having sufficient adhesive strength to an adherend having an uneven surface such as an inorganic material, e.g., concrete or the like, or wood by photopolymerization, and a moisture-curable adhesive sheet obtained by using this composition.

CITATION LIST

PATENT LITERATURE

Patent Literature 1: JP-A-2000-273418

SUMMARY OF INVENTION

TECHNICAL PROBLEM

However, in Patent Literature 1, the adhesive strength to an adherend having an uneven surface such as an inorganic material, e.g., concrete or the like, or wood is investigated but the adhesive strength to a wet surface is not investigated at all.

The present inventors have conducted extensive studies for the purpose of providing an adhesive sheet that can well adhere to a wet surface, and as a result, it has been conceived to apply an adhesive sheet including an adhesive layer formed from an adhesive composition containing a moisture-curable composition. When such an adhesive sheet is pasted to a wet surface, the moisture-curing component cures by water, thereby adhesiveness is improved. Therefore, it is important to maintain the moisture-curing component contained in the adhesive composition forming the adhesive layer in an unreacted state until use.

However, even before use of the adhesive sheet, the moisture-curable component reacts with, for example, moisture in the air, and as a result, adhesive force to a wet surface of the adhesive sheet is deteriorated. Therefore, an adhesive sheet that can maintain many moisture-curable components in an unreacted state until use, that is, an adhesive sheet having excellent storage stability, is desired.

In view of the above, the present invention has an object to provide an adhesive sheet having excellent adhesive strength to a wet surface and excellent storage stability.

SOLUTION TO PROBLEM

As a result of extensive studies, the present inventors have found that in an adhesive sheet including an adhesive layer comprising an adhesive composition containing a moisture-curable component, it is important to maintain the moisture-curable component in an unreacted state particularly in an adhesive surface side of the adhesive layer in order to maintain adhesive force to a wet surface, and the above problem can be solved by protecting the adhesive surface of the adhesive layer with a layer having low moisture permeability, and have completed the present invention.

Specifically, the present invention relates to an adhesive sheet including an adhesive layer comprising an adhesive composition containing a base polymer and a moisture-curable component, wherein an adhesive surface is peelably covered with a layer having moisture permeability of 5 g/m$^2$·24 hrs or less.

In one aspect of the present invention, an edge of the adhesive sheet may be peelably covered with the layer having moisture permeability of 5 g/m$^2$·24 hrs or less.

In one aspect of the present invention, the base polymer may contain a rubber-based polymer or an acrylic polymer.

In one aspect of the present invention, the moisture-curable component may be at least one selected from an isocyanate compound and an alkoxysilyl group-containing polymer.

In one aspect of the present invention, the moisture-curable component may be aliphatic isocyanate or alicyclic isocyanate.

In one aspect of the present invention, the adhesive composition may further contain a water-absorbing material

In one aspect of the present invention, the water-absorbing material may be a water-absorbing polymer.

In one aspect of the present invention, the layer having moisture permeability of 5 $g/m^2 \cdot 24$ hrs or less is a release liner, and a substrate may be laminated on the surface opposite the adhesive surface of the adhesive sheet.

In one aspect of the present invention, the layer having moisture permeability of 5 $g/m^2 \cdot 24$ hrs or less is a substrate, and the adhesive sheet may have a wound form.

In one aspect of the present invention, the adhesive sheet has an adhesive surface on both surfaces thereof, the layer having moisture permeability of 5 $g/m^2 \cdot 24$ hrs or less is a release liner, and the respective adhesive surfaces may be peelably covered with the layer having moisture permeability of 5 $g/m^2 \cdot 24$ hrs or less.

Moreover, the present invention relates to an adhesive sheet including an adhesive layer, wherein an adhesive surface of the adhesive sheet is peelably covered with a release liner, a width of the release liner is wider than a width of the adhesive layer, and an edge of the adhesive layer is covered with the release liner.

In one aspect of the present invention, the adhesive layer comprises an adhesive composition containing a base polymer and a moisture-curable component, and the release liner may have moisture permeability of 5 $g/m^2 \cdot 24$ hrs or less.

ADVANTAGEOUS EFFECTS OF INVENTION

According to the present invention, an adhesive sheet having excellent adhesive strength to a wet surface and excellent storage stability can be provided.

BRIEF DESCRIPTION OF DRAWINGS

[FIG. 1] FIG. 1 is one example of a schematic cross-sectional view of an adhesive sheet according to a first embodiment of the present invention.

[FIG. 2] FIG. 2 is one example of a schematic cross-sectional view of an adhesive sheet according to the first embodiment of the present invention.

[FIG. 3] FIGS. 3 (A) to (C) are one example of a schematic cross-sectional view of an adhesive sheet according to the first embodiment of the present invention.

[FIG. 4] FIG. 4 is a schematic view of an adhesive sheet according to a second embodiment of the present invention, wherein (A) is a schematic perspective view, (B) is a schematic side view, and (C) is an enlarged view of a dot line part of (B).

[FIG. 5] FIG. 5 is one example of a schematic view of an adhesive sheet according to a third embodiment of the present invention.

[FIG. 6] FIGS. 6 (A) and (B) are one example of a schematic view of an adhesive sheet according to the third embodiment of the present invention.

[FIG. 7] FIG. 7 is one example of a schematic view of an adhesive sheet according to a fourth embodiment of the present invention.

DESCRIPTION OF EMBODIMENTS

The embodiments for carrying out the present invention are described in detail below. However, the present invention is not construed as being limited to the embodiments described below.

The adhesive sheet of the present invention is an adhesive sheet including an adhesive layer comprising an adhesive composition containing a base polymer and a moisture-curable component, wherein an adhesive surface is peelably covered with a layer having moisture permeability of 5 $g/m^2 \cdot 24$ hrs or less.

The "adhesive sheet" in the present description can include products called "adhesive tape, "adhesive label", "adhesive film" and the like.

An "unreacted state" indicates the state that a curing reaction by water, a compound having active hydrogen or the like does not occur. Alternatively, it indicates the state that a functional group capable of chemically bonding to an adherend remains. It is important in the present invention that, in particular, the moisture-curable component in the vicinity of the surface in an adhesive surface side of the adhesive layer is in an unreacted state.

The "adhesive surface" is a surface (pasting surface) in the side to be pasted to an adherend in the adhesive sheet. In the adhesive sheet of the present invention, only one surface may be an adhesive surface, and both surfaces may be an adhesive surface.

Moreover, the "moisture permeability" means moisture permeability at 40°C and 90% RH measured according to JIS K 7192:2008, and specifically means the moisture permeability measured by the method described in the item of examples.

In the adhesive sheet of the present invention, the adhesive surface is peelably covered with a layer having moisture permeability of 5 g/m$^2$·24 hrs or less. Therefore, the moisture-curable component can be maintained in an unreacted state in the adhesive surface side before use (during storage). As a result, the moisture-curable component has excellent storage stability and additionally exhibits strong adhesive force to a wet surface of an adherend when used. The moisture permeability of the layer provided in the adhesive surface side of the adhesive layer is preferably 2 g/m$^2$·24 hrs or less, more preferably 1 g/m$^2$·24 hrs or less, and still more preferably 0.5 g/m$^2$·24 hrs or less. Smaller moisture permeability is preferred, and the lower limit thereof is not particularly limited, but is, for example, 0.001 g/m$^2$·24 hrs.

The adherend to which the adhesive sheet of the present invention is pasted is not particularly limited, but an adherend capable of chemically bonding to the moisture-curable component in an unreacted state in the adhesive composition (adhesive layer) is preferred. Examples of the adherend include concrete, mortar, asphalt, metal, wood, tiles, plastic materials (for example, building exterior materials and interior materials such as a painted surface or an inner wall of a bathroom, or the like; underwater and water surface structures such as ship or buoy, aquarium, bathtub, and sports equipment), cloths such as woven fabric or nonwoven fabric, papers, porous bodies such as an electrolyte membrane, a separation membrane or a filter, and the like. Moreover, the adherend may be a living body, and may be the outside of a living body (for example, skin, shell or scale), and the inside of a living body (for example, teeth or bone).

The present invention is described below by reference to specific embodiments, but the present invention is not construed as being limited to the following embodiments.

<First embodiment>

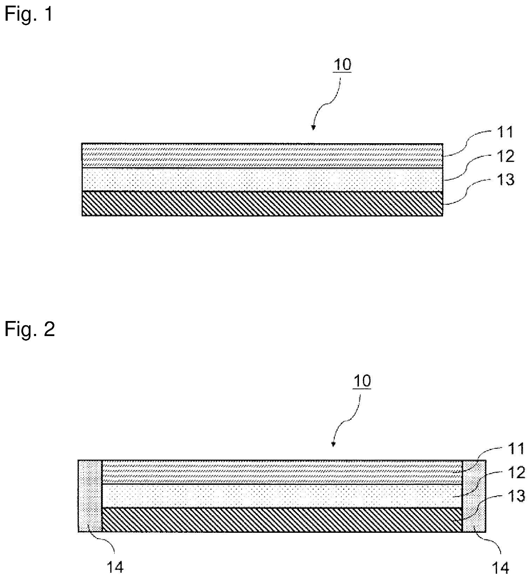

FIG. 1 is one example of a schematic cross-sectional view of the adhesive sheet according to a first embodiment of the present invention.

An adhesive sheet 10 of the present embodiment includes a substrate 11 and an adhesive layer 12, and the surface opposite the substrate 11 of the adhesive layer 12 is peelably covered with a release liner 13.

The adhesive sheet 10 of the present embodiment is used by peeling and removing the release liner 13 and pasting to an adherend through the adhesive layer 12. In other words, in the adhesive sheet 10 of the present embodiment, the surface in the release liner 13 side of the adhesive layer 12 is an adhesive surface. Moreover, the moisture permeability of the release liner 13 is 5 g/m$^2$·24 hrs or less.

A layer forming the adhesive sheet 10 of the present embodiment is described in detail below.

The adhesive layer 12 in the present embodiment comprises an adhesive composition containing a base polymer and a moisture-curable component.

When the adhesive sheet 10 of the present embodiment is pasted to a wet surface of an adherend, the moisture-curable component in an uncured state contained in the adhesive composition (adhesive layer) reacts with water absorbed from the wet surface of the adherend or water such as surrounding water or moisture to undergo moisture curing, and thereby, the adhesive force to the adherend is increased. As a result, when the adhesive sheet is pasted to the wet surface of the adherend, the adhesive force is increased with time and high adhesive force can be exhibited. Incidentally, the case where the moisture-curable component is capable of chemically bonding to the adherend is preferable because the adhesive force to the adherend surface is further improved by the progress of the chemical bond between the moisture-curable component capable of chemically bonding to the adherend contained in the adhesive composition (adhesive layer) and the adherend surface.

All the moisture-curable component is preferably in an unreacted state, but a part thereof may be in an unreacted state so long as the advantageous effects of the present invention are exhibited. This case is also included in the case that the moisture-curable component is contained in an unreacted state in the present embodiment.

The base polymer constituting the adhesive composition in the present embodiment is not particularly limited, and the conventional polymers used in an adhesive can be used. Examples of the base polymer include acrylic polymers, rubber-based polymers, vinyl alkyl ether-based polymers, silicone-based polymers, polyester-based polymers, polyamide-based polymers, urethane-based polymers, fluorine-based polymers, epoxy-based polymers, and the like. Among the above-exemplified polymers, acrylic polymers and rubber-based polymers are preferable from the viewpoint of adhesiveness, and rubber-based polymers are more preferable from the viewpoint of moisture permeability. Materials having lower moisture permeability are difficult to receive the influence of humidity in the external environment and water is difficult to be incorporated in the polymer. As a result, the reaction of the moisture-curable component and water can be suppressed, thereby the adhesive sheet 10 has excellent storage stability.

In the case where a material having high hydrophobicity is used in the base polymer, when the adhesive sheet 10 is pasted to a wet surface of an adherend, water on the wet surface that prevents adhesion between the adhesive sheet 10 and the adherend is excluded from the interface with the adherend. As a result, a contact area between the adhesive sheet 10 and the adherend is increased, and initial adhesive force is improved. In the case of a material having high hydrophilicity, an adhesive itself holds water, and as a result, water in the interface is difficult to exclude. Therefore, a rubber-based polymer is more preferable from this standpoint.

In the present embodiment, examples of the rubber-based polymers include isobutylene-based polymers such as polyisobutylene (PIB), copolymers of isobutylene and normal butylene, copolymers of isobutylene and isoprene (e.g., butyl rubbers such as regular butyl rubber, chlorinated butyl rubber, brominated butyl rubber and partially crosslinked butyl rubber), and vulcanized products thereof; styrene-based thermoplastic elastomers such as styrene-ethylene-butylene-styrene block copolymer (SEBS), styrene-isoprene-styrene block copolymer (SIS), isoprene rubber (IR), styrene-butadiene-styrene block copolymer (SBS), styrene-ethylene-propylene-styrene block copolymer (SESP, a hydrogenated product of SIS), styrene-ethylene-propylene block copolymer (SEP, a hydrogenated product of styrene-isoprene copolymer), styrene-isobutylene-styrene block copolymer (SIBS), styrene-butadiene rubber (SBR) and other styrene-based block copolymers; butyl rubber (IIR), butadiene rubber (BR), acrylonitrile-butadiene rubber (NBR), EPR (binary ethylene-propylene rubber), EPT (ternary ethylene-propylene rubber), acrylic rubber, urethane rubber, silicone rubber, and the like. Among them, polyisobutylene, butyl rubber, styrene-isoprene-styrene block copolymer are preferable, and polyisobutylene is more preferable. Those may be used in one kind alone or by combining two or more kinds.

Rubber modifier may be blended in order to impart excellent adhesiveness to the adhesive composition. Examples of the rubber modifier include paraffins, waxes, naphthenes, aromas, asphalts, drying oils (for example, linseed oil), animal and vegetable oils, petroleum-based oils (for example, process oil), polybutene, low molecular weight polyethylene glycol, phthalic esters, phosphoric esters, stearic acid or its esters, alkyl sulfonic acid esters, and the like. Those rubber modifies can be used alone or as a combination of two or more kinds. Petroleum-based oils and polybutene are preferable.

The acrylic polymer is a polymer comprising (meth)acrylic ester as a main monomer component, and in the present embodiment, the acrylic polymer containing (meth)acrylic alkyl ester ((meth)acrylic alkyl ester having straight chain or branched chain alkyl group) as a main monomer component can be preferably used. Examples of the (meth)acrylic alkyl ester include acrylic acid alkyl esters having 1 to 20 carbon atoms such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and the like. Among them, (meth)acrylic acid alkyl esters having an alkyl group having 1 to 14 carbon atoms are preferable, and (meth)acrylic acid alkyl esters having an alkyl group having 2 to 10 carbon atoms are more preferable. The "(meth)acrylic ester" means "acrylic ester" and/or "methacrylic ester" and others are the same.

Examples of (meth)acrylic ester other than the above-mentioned (meth)acrylic alkyl ester include (meth)acrylic esters having an alicyclic hydrocarbon group such as cyclopentyl (meth)acrylate, cyclohexyl (meth)acrylate and isobornyl (meth)acrylate, (meth)acrylic esters having an aromatic hydrocarbon group such as phenyl (meth)acrylate, and the like.

The (meth)acrylic esters can be used alone or by combining two or more kinds. When a monomer does not have a polar functional group, the monomer other than an acrylic monomer may be copolymerized with the (meth)acrylic ester.

In the present embodiment, the content of (meth)acrylic alkyl ester in the monomer component constituting the acrylic polymer is preferably 80% by mass or more, more preferably 90% by mass or more, and still more preferably 100% by mass.

The base polymer in the present embodiment preferably contains a polymer that does not have a functional group capable of reacting with the moisture-curable component, and more preferably does not contain a polymer having a functional group capable of reacting with the moisture-curable component, from the viewpoint of storage stability of the moisture-curable component.

In the present embodiment, to form an acrylic polymer that does not have a functional group reacting with the moisture-curable component, it is preferable that a monomer having a functional group capable of reacting with the moisture-curable component, such as a polar group-containing monomer or a polyfunctional monomer, is not used.

Examples of the functional group capable of reacting with the moisture-curable component include polar functional groups such as a carboxyl group, a hydroxyl group, an amide group, an amino group, a cyano group, a sulfonate group, a phosphate group, an imide group, an isocyanate group, an alkoxy group and silanol group.

In the present embodiment, the base polymer is preferably that the moisture permeability when a layer (sometimes called a polymer sheet or a polymer layer) having a thickness of 100 $\mu$m is formed is 25 g/m$^2$·24 hrs or less. When the moisture permeability is 25 g/m$^2$·24 hrs or less, the surrounding water and moisture can be well prevented or suppressed from being incorporated in the adhesive composition (adhesive layer) in each stage before pasting the adhesive sheet 10 to the adherend. By this, the reaction between the moisture-curable component and the surrounding water or moisture can be further well prevented or suppressed in each stage before pasting the adhesive sheet 10 to the adherend, and as a result, the storage stability of the adhesive sheet 10 can be made further excellent. The moisture permeability is preferably 23 g/m²·24 hrs or less, and more preferably 20 g/m²·24 hrs or less. Smaller moisture permeability is preferred, and the lower limit thereof is not particularly limited, but is, for example, 10 g/m²·24 hrs.

In the present embodiment, when the water absorption ratio of the base polymer is low, the water is difficult to be accumulated in the adhesive layer, and as a result, the storage stability of the moisture-curable component is improved, which is preferable. Specifically, the water absorption ratio of the base polymer after storage at 25°C and 50% RH for 24 hours is preferably 0.1% by mass or less, more preferably 0.08% by mass or less, and still more preferably 0.05% by mass or less. The water absorption ratio of the base polymer after storage at 25°C and 50% RH can be measured by Karl Fisher moisture evaporation coulometric titration method (JIS K0113: 2005). Specifically, the amount of water generated by heating evaporation at 200°C for 30 minutes is measured using Hiranuma Moisture Meter AQ-2100 manufactured by HIRANUMA, and the proportion to the mass of a sample before heating can be calculated as a water absorption ratio.

$$\text{Water absorption ratio (\% by mass)} = (\text{Amount of water measured by Karl}$$

$$\text{Fisher/total mass of a sample before measurement}) \times 100$$

In addition, the base polymer may contain a polymer (hereinafter referred to as other polymer) such as a modifier other than the above-described polymer to the extent that the advantageous effects of the present invention are not significantly impaired. In that case, the content ratio of the other polymer to the entire base polymer (100% by mass) is preferably 75% by mass or less, and more preferably 60% by mass or less.

Moreover, the content of the above-described polymer (that is, polymer other than the other polymer) to the entire base polymer (100% by mass) may be 100% by mass. However, when the other polymer is contained, the content thereof is preferably 80% by mass or less, and more preferably 60% by mass or less. Further, the content of the above-described polymer is preferably 25% by mass or more and more preferably 40% by mass or more.

The base polymer in the present embodiment preferably contains a polymer having a functional group that becomes a functional group capable of reacting with the moisture-curable component through a reaction with water. In this case, when having been pasted to a wet surface, the polymer having the functional group becomes a polymer having a functional group capable of reacting with the moisture-curable component through the reaction with moisture or the like absorbed from a wet surface. In addition to the curing of the moisture-curable component itself, by the progress of a cross-linking reaction of the polymer having a functional group capable of reacting with the moisture-curable component and the moisture-curable component, cohesive force of the adhesive layer is further improved and adhesiveness is further improved.

The polymer having a functional group that becomes a functional group capable of reacting with the moisture-curable component through the reaction with water, contained in the base polymer does not react with the moisture-curable component before the reaction with water, and as a result, storage stability of the moisture-curable component until pasting the adhesive sheet to a wet surface is secured.

Examples of the polymer having a functional group that becomes a functional group capable of reacting with the moisture-curable component through a reaction with water include polymers modified with maleic anhydride or amine, polymers modified with a substituent that becomes a hydroxyl group through a reaction with water, and the like. Among them, from the viewpoint of storage stability of the moisture-curing agent, a polymer modified with maleic anhydride (maleic anhydride-modified polymer) is preferable. For example, a maleic anhydride group of the polymer modified with maleic anhydride becomes a carboxyl group by ring opening through a reaction with water. The polymer having the carboxyl group and the moisture-curable component can undergo a crosslinking reaction.

The content of the base polymer in the adhesive composition is not particularly limited, but from the viewpoint of initial adhesive force, based on all the components (hereinafter sometimes referred to as non-volatile components) of the adhesive composition excluding a solvent, that is, when the total amount of the non-volatile components of the adhesive composition is 100% by mass, the content of the base polymer is preferably 5% by mass or more, more preferably 10% by mass or more, and still more preferably 20% by mass or more. Further, the content of the base polymer is, from the viewpoint of containing the moisture-curable component and the like, preferably 90% by mass or less, more preferably 80% by mass or less, and still more preferably 70% by mass or less, based on the total amount of the non-volatile components of the adhesive component.

In the present embodiment, the moisture-curable component is a component having a property (moisture curability) that causes a curing reaction due to the presence of water (water or moisture). For example, the moisture-curable component includes a resin or a compound which has, in the molecule, one or more hydrolyzable reactive groups or functional groups that start the reaction with water, and which starts curing with water (water or moisture) in the surroundings such as the air.

When the adhesive sheet 10 of the present embodiment is pasted to an adherend, the moisture-curable component cures by the water absorbed from a wet surface or water such as surrounding water or moisture, and thereby adhesiveness is further improved. The moisture-curable component is preferably a component capable of chemically bonding to an adherend to which the adhesive sheet is pasted. In such a case, the adhesiveness is further improved by the progress of chemical bonding between the moisture-curable component and the adherend.

Examples of the moisture-curable component in the present embodiment include isocyanate compounds, alkoxysilyl group-containing polymers, cyanoacrylate-based compounds, urethane-based compounds, and the like. Among them, isocyanate compounds and alkoxysilyl group-containing polymers are preferable in view of compatibility with the base polymer and curing rate. The moisture-curable component may be used in one kind alone or by combining two or more kinds.

An isocyanate compound (isocyanate) is hydrolyzed in the presence of water to form an amine, and curing is achieved by the reaction of the isocyanate with the amine to form a urea bond. In addition, an isocyanate compound can form a chemical bond with a hydroxyl group, an amino group, a carboxyl group, and the like on the surface of an adherend.

Examples of the isocyanate compound include aliphatic isocyanates, alicyclic isocyanates, aromatic isocyanates. Among them, aliphatic isocyanates and alicyclic isocyanates are preferable because they have good compatibility with the base polymer, particularly a rubber-based polymer, and have a mild reactivity with moisture and water.

Examples of the aliphatic isocyanates include ethylene diisocyanate, propylene diisocyanate, tetramethylene diisocyanate, hexamethylene diisocyanate (HDI), trimethylhexamethylene diisocyanate (TMHMDI), dodecamethylene diisocyanate, lysine diisocyanate (LDI), lysine triisocyanate (LTI), and the like. Among them, hexamethylene diisocyanate is preferable.

Examples of the alicyclic isocyanate include isophorone diisocyanate (IPDI), cyclohexylene diisocyanate (CHDI), 4,4'-dicyclohexylmethane diisocyanate, hydrogenated XDI ($H_6$XDI), hydrogenated MDI ($H_{12}$MDI), norbornene diisocyanate (NBDI), and the like.

Examples of the aromatic isocyanates include diphenylmethane diisocyanates (MDI) such as 4,4'-diphenylmethane diisocyanate, 2,4'-diphenylmethane diisocyanate, and 2,2'-diphenylmethane diisocyanate; crude diphenylmethane diisocyanate; polynuclear polyphenylene polymethyl polyisocyanate (polymeric MDI); tolylene diisocyanates (TDI) such as 2,4-toluene diisocyanate and 2,6-toluene diisocyanate; naphthalene diisocyanates (NDI) such as 1,4-naphthalene diisocyanate and 1,5-naphthalene diisocyanate; 1,5-tetrahydronaphthalene diisocyanate; phenylene diisocyanates (PDI) such as 1,2-phenylene diisocyanate, 1,3-phenylene diisocyanate, and 1,4-phenyl diisocyanate; xylene diisocyanates (XDI); tetramethylxylylene diisocyanate (TMXDI); tolidine diisocyanate (TODI); 2,4,6-trimethylphenyl-1,3-diisocyanate, 2,4 6-triisopropylphenyl-1,3-diisocyanate, chlorophenylene-2,4-diisocyanate, 4,4'-diphenyl ether diisocyanate, 3,3'-dimethyl-4,4'-diphenylmethane diisocyanate, 3,3'-dimethoxy-4,4'-diphenylene diisocyanate, 3,3'-dichloro-4,4'-biphenylene diisocyanate, and the like.

An alkoxysilyl group-containing polymer is hydrolyzed in the presence of water to form a silanol and is cured through condensation (crosslinking). In addition, an alkoxysilyl group-containing polymer can form a strong chemical bond through a dehydration condensation reaction, or the like with a hydroxyl group on the surface of an adherend.

As the alkoxysilyl group-containing polymer, for example, there can be used one or more selected from linear dimethoxy group-both terminal type ones such as Silyl SAX220 and Silyl SAT350, linear dimethoxy group-one terminal type ones such as Silyl SAT145, linear trimethoxy group-both terminal type ones such as Silyl SAX510 and Silyl SAT580, branched dimethoxy group-terminal type ones such as Silyl SAT400, and acrylic modified type ones such as Silyl MA440, Silyl MA903, and Silyl MA904 manufactured by Kaneka Corporation.

The content of the moisture-curable component in the adhesive composition in the present embodiment is not particularly limited, but from the viewpoint of obtaining high adhesive force, the content is preferably 1 part by mass or more, more preferably 2 parts by mass or more, and still more preferably 5 parts by mass or more, based on 100 parts by mass of the base polymer. In addition, the content of the moisture-curable component is desirably 100 parts by mass or less, desirably 80 parts by mass or less, and particularly desirably 60 parts by mass or less, based on 100 parts by mass of the base polymer. The preferable range of the content of the moisture-curable component based on 100 parts by mass of the base polymer in the adhesive layer is substantially the same as the preferable range of the content of the moisture-curable component based on 100 parts by mass of the base polymer in the adhesive composition, and the other component that can be contained in the adhesive composition (adhesive layer) is the same.

The adhesive composition in the present embodiment may further contain a water-absorbing material. Here, the water-absorbing material refers to a material capable of absorbing and retaining water. When the adhesive composition contains the water-absorbing material, at the time when the adhesive sheet 10 is pasted to the wet surface of the adherend, the water-absorbing material absorbs and retains the water on the wet surface, which interferes with the adhesion between the adhesive sheet 10 and the adherend, and thereby the initial adhesive force to the adherend of the adhesive sheet 10 is well exhibited. In addition, since the water on the wet surface of the adherend is absorbed and removed by the water-absorbing material, the adhesive sheet 10 can well follow even to an adherend having an uneven surface. As a result, the adhesiveness to the wet surface is more easily improved.

As the water-absorbing material, an organic water-absorbing material such as a water-absorbing polymer or an inorganic water-absorbing material can be used. Among them, a water-absorbing polymer is preferably used. The water-absorbing material may be used in one kind alone or may be used by combining two or more kinds.

Examples of the water-absorbing polymer include polyacrylic acids, water-soluble celluloses, polyvinyl alcohols, polyethylene oxides, starches, alginic acids, chitins, polysulfonic acids, polyhydroxymethacrylates, polyvinylpyrrolidones, polyacrylamides, polyethyleneimines, polyallylamines, polyvinylamines, maleic anhydrides, copolymers of monomers constituting those, and the like. The water-absorbing polymer may be used in one kind alone or may be used by combining two or more kinds.

Among them, a polyacrylic acid sodium salt or a copolymer of maleic anhydride and polyisobutylene is preferable, and a copolymer of maleic anhydride and polyisobutylene is more preferable.

A commercially available product may be used as the water-absorbing polymer. As commercially available products of the water-absorbing polymers, there can be suitably used, for example, KC Flock (cellulose powder, manufactured by Nippon Paper Industries, Co., Ltd.), Sunrose (carboxymethyl cellulose, manufactured by Nippon Paper Industries, Co., Ltd.), Aqualic CA (acrylic acid polymer partial sodium salt crosslinked product, manufactured by Nippon Shokubai Co., Ltd.), Acryhope (acrylic acid polymer partial sodium salt crosslinked product, manufactured by Nippon Shokubai Co., Ltd.), Sunwet (polyacrylate salt crosslinked product, manufactured by San-Dia Polymers, Ltd.), Aqua Pearl (polyacrylate salt crosslinked product, manufactured by San-Dia Polymers, Ltd.), Aqua Keep (acrylic acid polymer partial sodium salt crosslinked product, manufactured by Sumitomo Seika Chemicals Co., Ltd.), Aquacalk (modified polyalkylene oxide, manufactured by Sumitomo Seika Chemicals Co., Ltd.), KI gel (isobutylene-maleic anhydride copolymer crosslinked product, manufactured by Kuraray Co., Ltd.), and the like. In addition, in those water-absorbing polymers, water-absorbing performance may be adjusted by blending inorganic salts or hydrophobicizing hydrophilic groups (for example, carboxylic acid) in the polymer.

Examples of the inorganic water-absorbing material include silica gel, inorganic polymers such as Sumecton SA manufactured by Kunimine Industries Co., Ltd., and the like.

In the adhesive composition according to the present embodiment, the content of the water-absorbing material in the case of further containing the water-absorbing material is not particularly limited, but from the viewpoint of water absorbability and removability of the water of the adherend and the improvement in adhesiveness to a wet surface, the content is preferably 0.1 parts by mass or more, more preferably 0.5 parts by mass or more, and still more preferably 1 part by mass or more, based on 100 parts by mass of the base polymer. In addition, from the viewpoint of adhesive force after moisture-curing, the content of the moisture-absorbing material is preferably 50 parts by mass or less, more preferably 40 parts by mass or less, and still more preferably 30 part by mass or less, based on 100 parts by mass of the base polymer.

The adhesive composition according to the present embodiment may contain a tackifier (tackifying agent) for the purpose of adjusting the elastic modulus and imparting tackiness at the time of initial adhesion. Examples of the tackifier include polybutenes, rosin-based resins, terpene-based resins, petroleum-based resins (e.g., petroleum-based aliphatic hydrocarbon resins, petroleum-based aromatic hydrocarbon resins, and petroleum-based aliphatic/aromatic copolymerized hydrocarbon resins, petroleum-based alicyclic hydrocarbon resins (hydrogenated ones of aromatic hydrocarbon resins), etc.), coumarone-based resins, and the like. In view of compatibility with the base polymer, the tackifier is preferably petroleum-based resins and rosin-based resins. The tackifier may be used in one kind or by combining two or more kinds.

The content of the tackifier in the case where it is contained in the adhesive composition is, from the viewpoint of decreasing the elastic modulus, preferably 5 parts by mass or more, more preferably 10 parts by mass or more, and still more preferably 15 parts by mass or more, based on 100 parts by mass of the base polymer. In addition, the content of the tackifier is, from the viewpoint of imparting an appropriate cohesive force to the adhesive, preferably 500 parts by mass or less, more preferably 400 parts by mass or less, and still more preferably 250 parts by mass or less, based on 100 parts by weight of the base polymer.

To the adhesive composition of the present embodiment, additives usually added to an adhesive composition, such as viscosity modifiers, release modifiers, plasticizers, softeners, fillers, colorants (pigment, dye, etc.), antiaging agents, surfactants, leveling agents, antifoaming agents, light stabilizers, and the like may be further added to the extent that the advantageous effects of the present invention are not inhibited.

Examples of the filler include inorganic fillers such as talc, titanium oxide, calcium oxide, magnesium oxide, zinc oxide, titanium oxide, calcium carbonate, carbon, silica, clay, mica, barium sulfate, whiskers, magnesium hydroxide, and the like.

The content of the filler is, from the viewpoint of adhesiveness to rough surface, preferably 500 parts by mass or less, and more preferably 300 parts by mass or less, based on 100 parts by mass of the base polymer.

Moreover, various common solvents can be used as a solvent to be utilized for an adhesive composition. Examples of the solvents include organic solvents, e.g., esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone, and the like. The solvents may be used alone or by combining two or more kinds.

The adhesive layer 12 in the present embodiment is formed using the above-mentioned adhesive composition. The formation method thereof is not particularly limited, but a known method can be adopted. For example, the adhesive layer can be obtained by applying the adhesive composition to the substrate 11 or the release liner 13 mentioned later using a known coating method and drying the composition. Moreover, after the adhesive composition is applied to a surface having releasability and dried or cured to thereby form an adhesive layer 12 on the surface, the adhesive layer 12 may be pasted to the substrate 11 or the release liner 13 and then transferred thereto. The method for applying the adhesive composition to the substrate 11 or the release liner 13 is not particularly limited, and the application can be performed using, for example, a gravure roll coater, a reverse roll coater, a kiss roll coater, a dip roll coater, a bar coater, a knife coater, a spray coater, a fountain die coater, a closed edge die coater, or the like.

The drying temperature can be, for example, 50 to 150°C.

The thickness of the adhesive layer 12 after drying is not particularly limited, but is preferably 5 to 5000 $\mu$m and more preferably 10 to 1000 $\mu$m, from the viewpoint of exhibiting good followability to an adherend having an uneven surface.

The adhesive layer 12 may be formed using a non-solvent coating method such as rolling or extrusion. In this case, the adhesive composition is heated and kneaded, and the adhesive composition can be obtained as a kneaded product. For example, a batch-type kneading machine such as a kneader, Banbury mixer or a mixing roll, a continuous kneading machine such as a twin-screw kneading machine, and the like are used for kneading. The heating temperature during kneading can be, for example, 80 to 180°C.

The adhesive layer 12 can be formed into a sheet shape by heating the adhesive composition obtained above with a molding machine such as an extruder, a calender roll or a press machine (heat press machine).

The elastic modulus (initial elastic modulus) before moisture curing of the adhesive layer 12 in the present embodiment is preferably 400 kPa or less, more preferably 300 kPa or less, and still more preferably 200 kPa or less. When the initial elastic modulus of the adhesive layer 12 is 400 kPa or less, good followability can be exhibited even to an adherend having an uneven surface. In addition, in the case of containing the water-absorbing material, the water absorbency of the water-absorbing material is well exhibited without inhibiting swelling at the time when the water-absorbing material has absorbed water on the wet surface of the adherend. Further, in order to form the adhesive layer 12 satisfactorily, the initial elastic modulus is preferably 0.1 kPa or more.

Here, the initial elastic modulus of the adhesive layer 12 can be calculated from the stress-strain curve measured when a sample is produced by rounding the adhesive layer into a string shape and is stretched at a speed of 50 mm/min using a tensile tester (AG-IS manufactured by Shimadzu Corporation).

In the case where the adhesive composition (adhesive layer) contains the water-absorbing material, at the adhesive surface of the adhesive layer 12, the water-absorbing material is exposed at preferably 0.5 to 80% (more preferably 1 to 70%) of the surface area of the adhesive surface. When the proportion of the water-absorbing material occupied on the surface area of the adhesive surface of the adhesive layer 12 is 0.5% or more, water on the wet surface of the adherend can be absorbed well. Moreover, when the proportion of the water-absorbing material occupied on the surface area of the adhesive surface of the adhesive layer 12 is 80% or less, the adhesive layer 12 can be well adhered to the adherend.

Incidentally, the adhesive layer 12 is typically formed continuously, but is not limited to such a form, and may be, for example, an adhesive layer formed in a regular or random pattern, such as dot-like or stripe-like pattern.

The release liner 13 is a layer for protecting the adhesive layer 12, and is a layer that is peeled and removed when the adhesive sheet 10 is pasted to the adherend.

In the adhesive sheet 10 of the present embodiment, the adhesive layer 12 comprises the adhesive composition containing the base polymer and the moisture-curable component in an unreacted state, and the release liner 13 preferably has moisture permeability of 5 g/m$^2$·24 hrs or less. The moisture permeability of the release liner 13 is low as 5 g/m$^2$·24 hrs or less and the influence of the surrounding water (water or moisture) can be reduced or blocked. As a result, the moisture-curable component can be maintained in an unreacted state in the adhesive surface side of the adhesive layer 12, and therefore, adhesive force to the wet surface of the adhesive sheet 10 can be maintained. The moisture permeability of the release liner 13 is preferably 2 g/m$^2$·24 hrs or less, more preferably 1 g/m$^2$·24 hrs or less, and still more preferably 0.5 g/m$^2$·24 hrs or less, as described before.

The material that forms the release liner 13 is not particularly limited so long as the requirements of the moisture permeability are satisfied. For example, a release-treated layer is provided on a metal foil, a sheet of a rubber-based polymer, or the like, and such a metal foil or a sheet can be used as the release liner 13. Moreover, a metal film or an oxide film is provided on a substrate by plating or deposition, and the substrate on which a release-treated layer is provided can be used as the release liner 13. The substrate is not particularly limited, and examples thereof include plastic-based substrate sheets (synthetic resin sheets) such as a polyester sheet (polyethylene terephthalate (PET), polyethylene naphthalate (PEN) sheet, or the like), an olefinic resin sheet (polyethylene sheet, polypropylene sheet, or the like), a polyvinyl chloride sheet, a polyimide sheet, a polyamide sheet (nylon sheet), a polyurethane sheet or a rayon sheet, and papers (high quality paper, Japanese paper, kraft paper, glassine paper, synthetic paper, topcoat paper or the like). In addition to the above, the example further includes a multilayered product (for example, composite of 2 or 3 layers) obtained by laminating or co-extruding those.

The release-treated layer can be formed by, for example, surface treatment by silicone-based, long chain alkyl-based, fluorine-based or molybdenum sulfide release treatment agent or the like.

Moreover, a product obtained by providing a metal film or an oxide film on a low adhesive substrate comprising a fluorine-based polymer, a low adhesive substate comprising a non-polar polymer, or the like can be used as the release liner 13. Examples of fluorine-based polymer of the low adhesive substrate comprising the fluorine-based polymer include polytetrafluoroethylene, polychlorotrifluoroethylene, polyvinyl fluoride, polyvinylidene fluoride, tetrafluoroethylene-hexafluoropropylene copolymer, and chlorofluoroethylenevinylidene fluoride copolymer or the like. Examples of the non-polar polymer of the low adhesive substrate comprising the non-polar polymer include olefinic resins (for example, polyethylene or polypropylene) or the like.

The material of the metal foil, metal film and oxide film is not particularly limited, but, for example, aluminum or aluminum oxide is preferable from viewpoint of cost.

The method for forming the release liner 13 is not particularly limited, and the release liner can be formed by the known and conventional method. The thickness of the release liner 13 is not particularly limited, but is, for example, 10 to 200 $\mu$m.

The material that forms the substrate 11 of the present embodiment is not particularly limited, and examples thereof include polyolefin-based films such as polyethylene, polypropylene and ethylene-propylene copolymer; polyester-based films such as polyethylene terephthalate; plastic films such as polyvinyl chloride; papers such as kraft paper or Japanese paper; cloths such as cotton cloth and staple fiber cloth; woven fabrics such as polyester nonwoven fabric and vinylon woven fabric; and metal foils. The thickness of the substrate 11 is not particularly limited, but is, for example, 10 to 200 $\mu$m.

The plastic films may be a non-stretched film and may be a stretched (monoaxially stretched or biaxially stretched) film. Application of an undercoat or a surface treatment such as corona discharge treatment may be applied to the surface on which the adhesive layer 12 of the substrate 11 is provided.

To further improve storage stability of the adhesive sheet 10 of the present embodiment, moisture permeability of the substrate 11 is preferably low. The moisture permeability of the substrate 11 is, for example, preferably 60 g/m$^2$·24 hrs or less, more preferably 50 g/m$^2$·24 hrs or less, and still more preferably 30 g/m$^2$·24 hrs or less. From this viewpoint, the material that forms the substrate 11 preferably uses, for example, materials described as the material that forms the release liner 13.

The adhesive sheet 10 of the present embodiment may include an edge protective layer 14. FIG. 2 is one example of a schematic cross-sectional view of the adhesive sheet 10 of the present embodiment that includes the edge protective layer 14.

When the adhesive sheet 10 of the present embodiment includes the edge protective layer 14, water can be suppressed from penetrating into the adhesive layer 12 from the edge, and therefore, storage stability of the adhesive sheet 10 is further improved. The edge protective layer 14 preferably has low moisture permeability. The edge of the adhesive sheet 10 may be peelably covered with a layer having the moisture permeability of 5 g/m$^2$·24 hrs or less.

The method for forming the edge protective layer 14 is not particularly limited, but, for example, the edge protective layer can be formed by treating the edge of the adhesive sheet 10 with an edge treatment agent. The treatment by the edge treatment agent can be conducted, for example, by applying the edge treatment agent to a cut surface when the adhesive sheet 10 is cut, and as necessary, drying.

The edge treatment agent is not particularly limited, but examples thereof include dispersions of the conventional inorganic fillers such as glass beads, aluminum oxide, aluminum hydroxide and magnesium hydroxide. The edge protective layer may be an organic coating film, and may be, for example, an organic coating film such as urethane. From the viewpoint of moisture permeability, a rubber-based polymer coating film having low moisture permeability is particularly preferable. For example, polyisobutylene (PIB), butyl rubber (IIR), a styrene-isobutylene-styrene block copolymer (SIBS) and the like are preferably used.

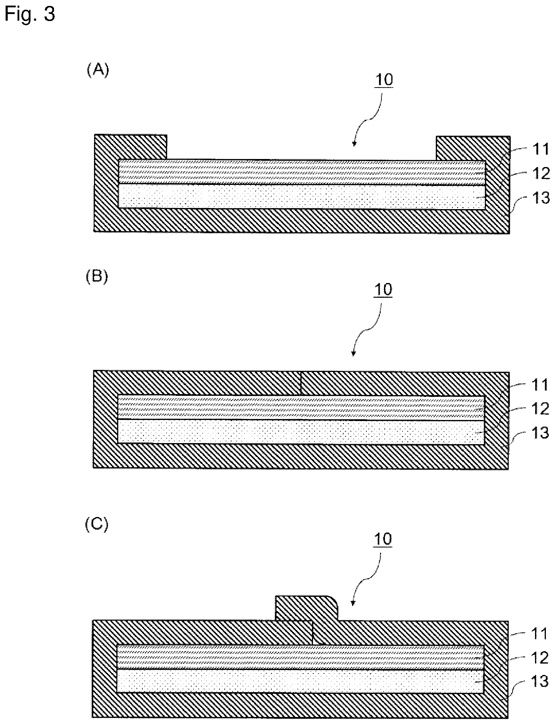

The adhesive sheet 10 of the present embodiment may be constituted such that the width of the release liner 13 is wider than the width of the adhesive layer 12 and the release liner 13 covers the edge of the adhesive layer 12. By this constitution, water can be suppressed from penetrating into the adhesive layer 12 from the edge, and as a result, storage stability of the adhesive sheet 10 is further improved. FIG. 3 shows one example of a schematic cross-sectional view of the adhesive sheet 10 of the present embodiment that has this constitution. As shown in FIG. 3, the edge of the adhesive layer 12 can be covered with the release liner 13 by turning up the release liner 13 along the edges of the adhesive layer 12 and the substrate 11.

The adhesive sheet may be constituted such that the release liner 13 covers only the vicinity of the edges of the adhesive layer 12 and the substrate 11 as shown in FIG. 3(A). However, water can be suppressed from permeating the substrate 11 and penetrating into the adhesive layer 12 by constituting such that the entire adhesive layer 12 and the entire substrate 11 are covered with the release liner, as shown in FIGS. 3 (B) and (C). As a result, storage stability of the adhesive sheet 10 is further improved, and this constitution is particularly preferable.

<Second embodiment>

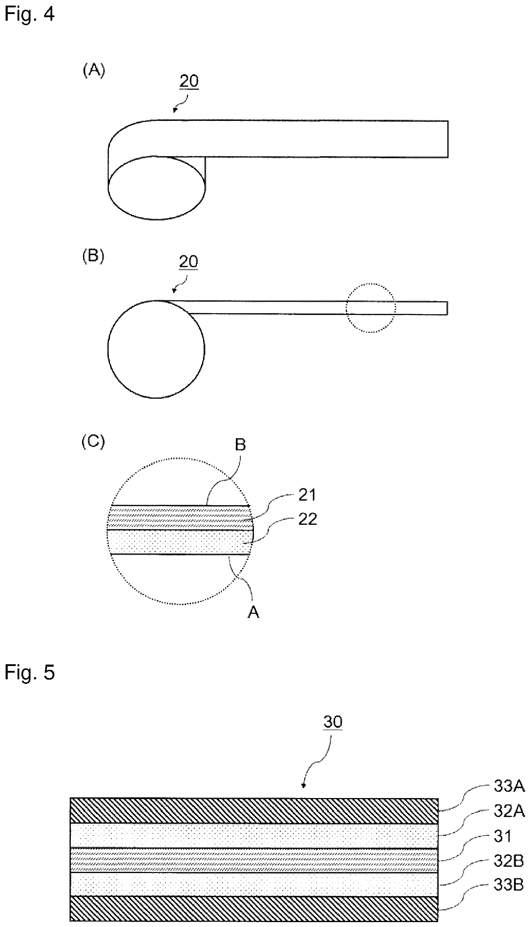

FIGS. 4 (A) to (C) are schematic views of an adhesive sheet 20 according to a second embodiment of the present invention.

An adhesive sheet 20 of the present embodiment includes a substrate 21 and an adhesive layer 22. An adhesive surface A of the adhesive layer 22 faces inward and is peelably pasted to a back B of the substrate 21, and the adhesive sheet is wound. In other words, in the present embodiment, the back B of the substrate 21 is a peelable surface. When using the adhesive sheet 20 of the present embodiment, the adhesive surface A is peeled from the back B of the substrate 21 and pasted to an adherend. In the present embodiment, moisture permeability of the substrate 21 is 5 $g/m^2 \cdot 24$ hrs or less.

The adhesive layer 22 in the present embodiment is the same as the adhesive layer 12 in the first embodiment.

In the present embodiment, the moisture permeability of the substrate 21 is preferably 2 $g/m^2 \cdot 24$ hrs or less, more preferably 1 $g/m^2 \cdot 24$ hrs or less, and still more preferably 0. 5 $g/m^2 \cdot 24$ hrs or less. The material that forms the substrate 21 of the present embodiment is not particularly limited, but, for example, the same release liner as the release liner 13 in the first embodiment can be used.

The adhesive sheet 20 of the present embodiment may include an edge protective layer. The edge protective layer can be provided, for example, in the same manner as in the first embodiment.

The edge protective layer may be provided by pasting the edge protective layer to the edge of the wound adhesive sheet 20 (the side of a wound body). As the edge protective layer in this case, for example, the conventional release liner can be used. In particular, like the release liner 13 indicated in the description of the first embodiment, use of a release liner having low moisture permeability is preferable from the viewpoint of storage stability of the adhesive sheet 20.

The adhesive sheet 20 may be wound such that the substrate 21 faces inward. In this case, the adhesive surface of the adhesive layer 22 is located outside in the wound outermost circumference. Therefore, a release liner having the moisture permeability of 5 $g/m^2 \cdot 24$ hrs or less is separately pasted to the adhesive surface of the outermost circumference.

<Third embodiment>

FIG. 5 is one example of a schematic cross-sectional view of an adhesive sheet 30 according to a third embodiment of the present invention.

The adhesive sheet 30 of the present embodiment includes a first release liner 33A, a first adhesive layer 32A, a substrate 31, a second adhesive layer 32B, and a second release liner 33B, in this order.

The adhesive sheet 30 of the present embodiment is used by peeling and removing the first release liner 33A and the second release liner 33B, and pasting the first adhesive layer 32A and the second adhesive layer 32B to the respective different adherends. In other words, in the present embodiment, both the surface in the first release liner 33A side of the first adhesive layer 32A and the surface in the second release liner 33B of the second adhesive layer 32B are adhesive surfaces. Moreover, the first release liner 33A and the second release liner 33B each have the moisture permeability of 5 $g/m^2 \cdot 24$ hrs or less.

The substrate 31, the first and second adhesive layers 32A and 32B, and the first and second release liners 33A and 33B in the present embodiment are the same as the substrate 11, the adhesive layer 12, and the release liner 13 in the first embodiment.

The adhesive sheet 30 in the present embodiment may be wound as in the second embodiment. In other words, the adhesive sheet 30 of the present embodiment, for example, does not include the second release liner 33B, and may be wound such that the adhesive surface of the second adhesive layer 32B is pasted to the surface opposite the first adhesive layer 32A of the first release liner 33A.

The adhesive sheet 30 of the present embodiment may include an edge protective layer as same as the adhesive sheet 10 of the first embodiment and the adhesive sheet 20 of the second embodiment.

Similar to the adhesive sheet 10 of the first embodiment, the adhesive sheet 30 of the present embodiment may be constituted such that the width of the first release liner 33A and/or the second release liner 33B is wider than the width of the first adhesive layer 32A and the second adhesive layer 32B, and the first release liner 33A and/or the second release liner 33B cover the edges of the first adhesive layer 32A and the second adhesive layer 32B.

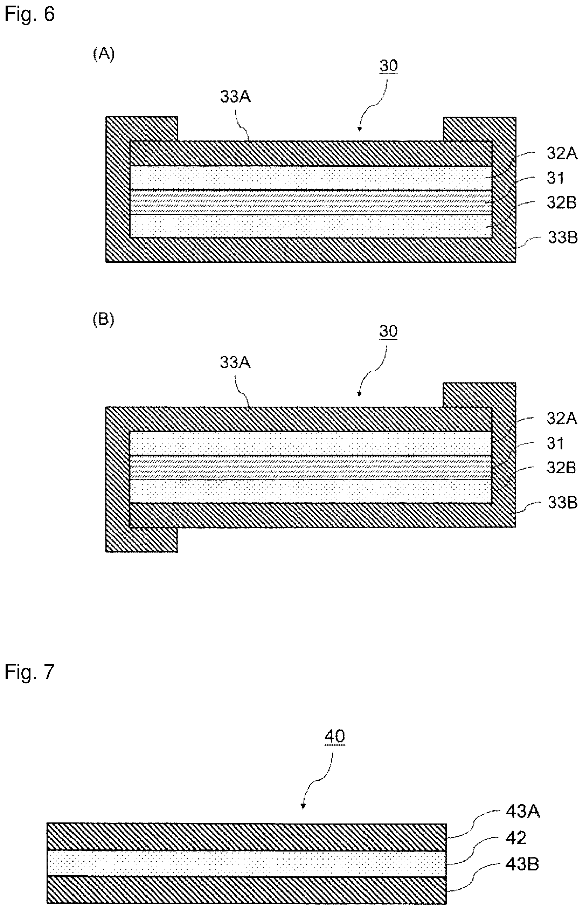

In other words, as shown in FIG. 6 (A), the adhesive sheet may be constituted such that the width of one of the first release liner 33A or the second release liner 33B (in FIG. 6 (A), the second release liner 33B) is wider than the width of the first adhesive layer 32A and the second adhesive layer 32B and the edges of the first adhesive 32A and the second adhesive layer 32B are covered with the release liner having wide width, and as shown in FIG. 6 (B), the adhesive sheet may be constituted such that the widths of both the first release liner 33A and the second release liner 33B are wider than the widths of first adhesive layer 32A and the second adhesive layer 32B and the edges of the first adhesive 32A and the second adhesive layer 32B are covered with the respective liners.

<Fourth embodiment>

FIG. 7 is one example of a schematic cross-sectional view of an adhesive sheet 40 according to a fourth embodiment of the present invention.

The adhesive sheet 40 of the present embodiment includes a first release liner 43A, an adhesive layer 42 and a second release liner 43B, in this order.

The adhesive sheet 40 of the present embodiment is used by peeling and removing the first release layer 43A and the second release liner 43B and pasting one surface and other surface of the adhesive layer 42 to the respective different adherends. In other words, in the present embodiment, the surface in the first release liner 43A side of the adhesive layer 42 and the surface in the second release liner 43B side of the adhesive layer 42 each are an adhesive surface. Moreover, the first release liner 43A and the second release liner 43B each have the moisture permeability of 5 g/m$^2$·24 hrs or less.

The adhesive layer 40 of the present embodiment is the same as in the third embodiment, except that a substrate is not included and the adhesive layer is one layer.

The present invention further relates to an adhesive sheet including an adhesive layer, wherein an adhesive layer of the adhesive sheet is peelably covered with a release liner, the width of the release liner is wider than the width of the adhesive layer, and the release liner covers the edge of the adhesive layer.

The adhesive layer preferably comprises an adhesive composition containing a base polymer and a moisture-curable component. The release liner preferably has moisture permeability of 5 g/m$^2$·24 hrs or less.

Specifically, the adhesive sheet includes adhesive sheets having the constitutions shown in FIGS. 3 (A) to (C) and FIGS. 6 (A) and (B).

Although the present invention has been described above by reference to the specific examples, the present invention is not construed as being limited to the above-described embodiments and can be carried out in any configuration that belongs within the range of the technical concept of the present invention.

The storage stability of the adhesive sheets having the above constitutions of the present invention can be evaluated by various methods. For example, the storage stability can be evaluated by maintenance ratio (residual ratio) of the moisture-curable component in the adhesive layer after storage at 40°C and 90% RH for 24 hours or 72 hours. In the adhesive sheet of the present invention, the maintenance ratio (residual ratio) of the moisture-curable component in the vicinity of the surface in the adhesive layer surface side of the adhesive layer after storage at 40°C and 90% RH for 24 hours is preferably 20% or more, more preferably 40% or more and still more preferably 50% or more. Higher maintenance ratio (residual ratio) is preferable, and 100% is most preferable.

In the adhesive sheet of the present invention, the maintenance ratio (residual ratio) of the moisture-curable component in the vicinity of the surface in the adhesive layer surface side of the adhesive layer after storage at 40°C and 90% RH for 72 hours is preferably 30% or more, more preferably 40% or more and still more preferably 50% or more.

Higher maintenance ratio (residual ratio) is preferable, and 100% is most preferable.

For example, in the case of using an isocyanate compound as the moisture-curable component, the maintenance ratio of the moisture-curable component in the vicinity of the surface in the adhesive layer surface side of the adhesive layer after storage at 40°C and 90% RH for 24 hours or 72 hours can be obtained from infrared spectrum obtained by Attenuated Total Reflection (ATR method). The ATR method is a measurement method that can obtain infrared absorption spectrum in a region of a depth of several μm from the surface of a sample, and is therefore suitable for the measurement of the maintenance ratio of the moisture-curable component in the vicinity of the surface of the adhesive layer. Specifically, the maintenance ratio can be measured as follows.

First, the ratio of the absorbance at 2268 cm$^{-1}$ derived from the isocyanate group and the absorbance at 1462 cm$^{-1}$ derived from the methylene group of the base polymer obtained from the infrared spectroscopic measurement by ATR method of the adhesive sheet (adhesive layer) immediately after production is calculated. Here, the absorbance ratio is the ratio of the absorbance derived from the above-mentioned isocyanate group to the absorbance derived from the above-mentioned methylene group (the absorbance derived from the isocyanate group/the absorbance derived from the methylene group). In addition, the absorbance ratio obtained from the infrared spectroscopic measurement by ATR method of the adhesive sheet (adhesive layer) after storage under the environment of 40°C and 90% RH for 24 hours or 72 hours is similarly calculated, and the maintenance ratio of the moisture-curable component (isocyanate compound) is calculated from the change ratio thereof. Specifically, it is calculated from the following relational expression.

$$\text{Maintenance ratio of moisture-curable component (isocyanate compound) (\%)} =$$

$$\{(\text{Absorbance ratio of adhesive sheet after storage under environment of 40°C and 90\% RH}$$

$$\text{for 24 hours or 72 hours})/(\text{Absorbance ratio of adhesive sheet immediately after production})\}$$

$$\times 100$$

Also in the case where the moisture-curable component is other than an isocyanate compound, the maintenance ratio of the moisture-curable component in the vicinity of the surface in the adhesive layer surface side of the adhesive layer can be similarly calculated from the change ratio of absorbance ratio at a wave number at which a representative peak derived from the moisture-curable component appears in the infrared spectroscopic measurement by ATR method.

For example, in the case where an alkoxysilyl group-containing polymer is used as the moisture-curable component, the maintenance ratio of the moisture-curable component in the vicinity of the surface in an adhesive surface side of the adhesive layer after storage under the environment of 25°C and 50% RH for 24 hours can be evaluated by determining the amount of alcohol formed by thermal decomposition of an alkoxysilyl group, in the adhesive layer by gas chromatograph mass spectrometry (GC/MS). Specifically, it can be measured as follows.

First, the amount of alcohol obtained from GC/MS of the adhesive sheet (adhesive layer) immediately after production and the amount of alcohol obtained from GC/MS of the adhesive sheet (adhesive layer) after storage under the environment of 25°C and 50% RH for 24 hours are determined, and the maintenance ratio of the moisture-curable component (alkoxysilyl group) can be calculated from the change ratios of those. Specifically, it is calculated from the following relational expression.

Maintenance ratio of moisture-curable component (alkoxysilyl group) (%) = [(Amount of alcohol obtained from GC/MS of adhesive sheet (adhesive layer) after storage under environment of 25°C and 50% RH for 24 hours/Amount of alcohol obtained from GC/MS of adhesive sheet (adhesive layer) immediately after production)] × 100

Even though the adhesive sheet having the above constitution of the present invention is not wrapped with an appropriate package, the moisture-curable component can be well maintained in an unreacted state. Therefore, the adhesive sheet of the present invention is not always required to be wrapped with an appropriate package in order to maintain the unreacted state. However, in order to maintain further well the moisture-curable component in an unreacted state, the adhesive sheet may be further wrapped with an appropriate package. Examples of the package include a moisture-proof bag made of aluminum, but is not limited to this. The atmosphere in the package may be air, but may be substituted with an inert gas such as nitrogen or argon. Moreover, a desiccant such as silica gel may be included in the package.

Examples

The present invention is specifically described below by reference to examples, but the present invention should not be construed as being limited these examples.

<Preparation of adhesive sheet>

(Example 1)

A high molecular weight polyisobutylene polymer (OPANOL N80 manufactured by BASF): 50 parts by mass and a low molecular weight polyisobutylene polymer (TETRAX 5T manufactured by JXTG Energy Corporation): 50 parts by mass as base polymers were kneaded at a kneading temperature of 140°C and a rotation speed of 40 rpm (rotations per minute) using a labo kneader mill (TDR300-3 Model manufactured by Toshin Co., Ltd.) to prepare a masterbatch 1. Then, with 100 parts by mass of the masterbatch 1 were blended 100 parts by mass of liquid polybutene (HV-300 manufactured by JXTG Energy Corporation), 16 parts by mass of hexamethylene diisocyanate (HDI) (BASONAT HA2000 manufactured by BASF) as a moisture-curable component, 16 parts by mass of an isobutylene-maleic anhydride copolymer (KI gel manufactured by Kuraray Trading Co., Ltd.) as a water-absorbing material, 100 parts by mass of a petroleum resin (T-Rez RB100 manufactured by JXTG Energy Corporation) as a tackifier and 100 parts by mass of heavy calcium carbonate (manufactured by Maruo Calcium Co., Ltd) as a filler to prepare an adhesive composition 1.

The adhesive composition 1 was sandwiched between a substrate (aluminum foil, thickness 50 $\mu$m) and a

release liner (aluminum foil, one surface of which being a release surface which was release-treated, product name RELEASE COAT manufactured by Toyo Aluminum K.K., thickness 12 $\mu$m), and an adhesive layer having a thickness of 300 $\mu$m was formed by hot press (working temperature 60°C). Thus, an adhesive sheet of Example 1 was prepared.

(Example 2)

A high molecular weight polyisobutylene polymer (OPANOL N80 manufactured by BASF): 75 parts by mass and a low molecular weight polyisobutylene polymer (TETRAX 5T manufactured by JXTG Energy Corporation): 25 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch 2. Then, with 100 parts by mass of the masterbatch 2 were blended 100 parts by mass of liquid polybutene (HV-300 manufactured by JXTG Energy Corporation), 34 parts by mass of hexamethylene diisocyanate (HDI) (BASONAT HA2000 manufactured by BASF) as a moisture-curable component, 100 parts by mass of a petroleum resin (T-Rez RB100 manufactured by JXTG Energy Corporation) as a tackifier, 200 parts by mass of heavy calcium carbonate (manufactured by Maruo Calcium Co., Ltd) as a filler and 3 parts by mass of carbon black (SEAST 3H manufactured by Tokai Carbon Co., Ltd) as a colorant to prepare an adhesive composition 2.

The adhesive composition 2 was sandwiched between an aluminum/polyethylene (PE) composite film (manufactured by Toyo Aluminum K.K., thickness 55 $\mu$m) and a release liner (aluminum foil, one surface of which being a release surface which was release-treated, product name RELEASE COAT manufactured by Toyo Aluminum K.K., thickness 12 $\mu$m), and an adhesive layer having a thickness of 300 $\mu$m was formed by hot press (working temperature 60°C). Thus, an adhesive sheet of Example 2 was prepared.

(Example 3)

An adhesive sheet of Example 3 was prepared in the same manner as in Example 2, except that hexamethylene diisocyanate (HDI) (BASONAT HI2000 manufactured by BASF) was used as a moisture-curable component, an aluminum oxide-deposited PET film (product name BARRIALOX 1011SB-R2 manufactured by Toray Industries, Inc., thickness 12 $\mu$m) was used as a substrate, and an aluminum foil having different thickness (one surface of which being a release surface which was release-treated, product name SEPANIUM manufactured by Toyo Aluminum K.K., thickness 20 $\mu$m) was used as a release liner.

(Example 4)

An adhesive sheet of Example 4 was prepared in the same manner as in Example 2, except that hexamethylene diisocyanate (HDI) (TAKENATE D-177N manufactured by Mitsui Chemicals, Inc.) was used as a moisture-curable component, an aluminum-deposited PET film (product name METALUMY S manufactured by Toray Industries, Inc., thickness 25 $\mu$m) was used as a substrate, and an aluminum foil having different thickness (one surface of which being a release surface which was release-treated, product name SEPANIUM manufactured by Toyo Aluminum K.K., thickness 30 $\mu$m) was used as a release liner.

(Example 5)

An adhesive sheet of Example 5 was prepared in the same manner as in Example 2, except that hexamethylene diisocyanate (HDI) (TAKENATE D-178NL manufactured by Mitsui Chemicals, Inc.) was used as a moisture-curable component, and PET film (product name LUMIRROR S10 manufactured by Toray Industries, Inc., thickness 25 $\mu$m) was used as a substrate.

(Example 6)

Hexamethylene diisocyanate (HDI) (BASONAT HA2000 manufactured by BASF): 15 parts by mass, an isobutylene-maleic anhydride copolymer (KI gel manufactured by Kuraray Trading Co., Ltd.): 10 parts by mass as a water-absorbing material, and a liquid fully hydrogenated rosin methyl ester resin (M-HDR manufactured by Maruzen Petrochemical Co., Ltd.): 100 parts by mass as a tackifier were blended with a solution obtained by diluting 100 parts by mass of an acrylic polymer (homopolymer of butyl acrylate) as a base polymer with ethyl acetate as a solvent to prepare an adhesive composition 3.

The adhesive composition 3 was applied to a release surface of a release liner (aluminum foil, one surface of which being a release surface which was release-treated, product name RELEASE COAT manufactured by Toyo Aluminum K.K., thickness 12 $\mu$m), dried at 80°C for 5 minutes and then further dried at 130°C for 30 minutes to prepare an adhesive layer having a thickness of 300 μm. PET film (product name LUMIRROR S10 manufactured by Toray Industries, Inc., thickness 12 μm) as a substrate was pasted to other surface of the adhesive layer formed on the release liner to prepare an adhesive sheet of Example 6.

(Example 7)

A high molecular weight polyisobutylene polymer (OPANOL N80 manufactured by BASF): 75 parts by mass and a low molecular weight polyisobutylene polymer (TETRAX 5T manufactured by JXTG Energy Corporation): 25 parts by mass as base polymers were kneaded at a kneading temperature of 140°C and a rotation speed of 40 rpm using a labo kneader mill (TDR300-3 Model manufactured by Toshin Co., Ltd.) to prepare a masterbatch 2. Then, with 100 parts by mass of the masterbatch 2 were blended 100 parts by mass of liquid polybutene (HV-300 manufactured by JXTG Energy Corporation), 34 parts by mass of hexamethylene diisocyanate (HDI) (BASONAT HA2000 manufactured by BASF) as a moisture-curable component, 100 parts by mass of a petroleum resin (T-Rez RB100 manufactured by JXTG Energy Corporation) as a tackifier and 200 parts by mass of heavy calcium carbonate (manufactured by Maruo Calcium Co., Ltd) as a filler to prepare an adhesive composition 7, and an adhesive sheet of Example 7 was prepared in the same manner as in Example 1, except that an aluminum foil laminate sheet (thickness 41 μm, PET#9/A1#7/PET#25, the PET#9 side is a release surface which was release-treated, manufactured by Toyo Aluminum K.K., thickness 55 μm) was used as a release liner.

(Example 8)

An adhesive sheet of Example 8 was prepared in the same manner as in Example 7, except that the release liner was changed to an aluminum-deposited PET in which the aluminum-deposited surface is a release surface which was release-treated (thickness 25 μm, METALUMY S manufactured by Toray Industries, Inc.).

(Example 9)

An adhesive sheet of Example 9 was prepared in the same manner as in Example 7, except that the release liner was changed to an aluminum-deposited PET in which the aluminum-deposited surface is a release surface which was release-treated (thickness 50 μm, METALUMY TS manufactured by Toray Industries, Inc.).

(Example 10)

An adhesive sheet of Example 10 was prepared in the same manner as in Example 7, except that the release liner was changed to an aluminum oxide-deposited PET in which the aluminum oxide-deposited surface is a release surface which was release-treated (thickness 12 μm, BARRIALOX VM-PET 1011 SB-R2 manufactured by Toray Industries, Inc.).

(Example 11)

A high molecular weight polyisobutylene polymer (OPANOL N80 manufactured by BASF): 25 parts by mass and a low molecular weight polyisobutylene polymer (TETRAX 5T manufactured by JXTG Energy Corporation): 75 parts by mass as base polymers were kneaded at a kneading temperature of 140°C and a rotation speed of 40 rpm (rotations per minute) using a labo kneader mill (TDR300-3 Model manufactured by Toshin Co., Ltd.) to prepare a masterbatch 11. Then, with 100 parts by mass of the masterbatch 11 were blended 100 parts by mass of liquid polybutene (HV-300 manufactured by JXTG Energy Corporation), 60 parts by mass of a moisture-curable silyl group-containing olefin resin (Vestplast 206 manufactured by Evonik Degussa) as a moisture-curable component, and 100 parts by mass of a petroleum resin (T-Rez RB100 manufactured by JXTG Energy Corporation) as a tackifier to prepare an adhesive composition 11, and an adhesive sheet of Example 11 was prepared in the same manner as in Example 1.

(Example 12)

An adhesive sheet of Example 12 was prepared in the same manner as in Example 11, except for changing the base polymers to 75 parts by mass of a high molecular weight polyisobutylene polymer (OPANOL N80 manufactured by BASF) and 25 parts by mass of a low molecular weight polyisobutylene polymer (TETRAX 5T manufactured by JXTG Energy Corporation), and changing the moisture-curable component to 5 parts by mass of a silyl-terminated polyether resin (Silyl SAT 350 manufactured by Kaneka Corporation).

(Comparative Example 1)

An adhesive sheet of Comparative Example 1 was prepared in the same manner as in Example 5, except for using hexamethylene diisocyanate (HDI) (BASONAT HA2000 manufactured by BASF) as the moisture-curable component and PET film (product name DIAFOIL MRF manufactured by Mitsubishi Chemical Corporation, thickness 38 $\mu$m) as the release liner.

(Comparative Example 2)

An adhesive sheet of Comparative Example 2 was prepared in the same manner as in Comparative Example 1, except for using PET film (product name DIAFOIL MRF manufactured by Mitsubishi Chemical Corporation, thickness 75 $\mu$m) having different thickness as the release liner and an aluminum foil (thickness 50$\mu$m) as the substrate.

<Measurement of moisture permeability of substrate and release liner>

Moisture permeability (g/m$^2$·24 hrs) at 40°C and 90% RH of the substrate and release liner used in the preparation of the adhesive sheet of each example above was measured using Deltaperm UH-2M manufactured by Technolox.
The results are shown in Table 1.

<Measurement of maintenance ratio of moisture-curable component>

In regard to the adhesive sheets of Examples 1 to 10 and Comparative Examples 1 and 2, a release liner was peeled and removed from the adhesive sheet of each example immediately after the production, and for the adhesive surface side of the adhesive layer, a ratio of the absorbance at 2268 cm$^{-1}$ derived from an isocyanate group and the absorbance at 1462 cm$^{-1}$ derived from a methylene group of the base polymer, obtained from infrared spectroscopy (using 3100 FT-IR manufactured by Varian, measuring by ATR method) was calculated. The absorbance ratio as used herein is a ratio of the absorbance derived from the isocyanate group to the absorbance derived from the methylene group (absorbance derived from isocyanate group/absorbance derived from methylene group).
Next, the adhesive sheet after storage under the environment of 40°C and 90% RH for 24 hours was subjected to infrared spectroscopy in the same manner as above, and the absorbance ratio was calculated.
From those change ratios, the maintenance ratio (40°C × 90% RH, after 24 hours) of the moisture-curable component (isocyanate compound) was calculated. Specifically, it was calculated from the following relational expression.

$$\text{Maintenance ratio (\%) of moisture-curable component (isocyanate compound)} =$$

$$\{(\text{Absorbance ratio of adhesive sheet after storage under environment of 40°C and 90\% RH}$$

$$\text{for 24 hours)/(Absorbance ratio of adhesive sheet immediately after production)}\} \times 100$$

The adhesive sheets of Examples 1 to 6 and Comparative Examples 1 and 2 were stored under the environment of 40°C and 90% RH for 72 hours, and then subjected to infrared spectroscopy. The absorbance ratio was calculated in the same manner as above, and the maintenance ratio (40°C × 90% RH, after 72 hours) of the moisture-curable component (isocyanate compound) was calculated.
20 mg of each of the adhesive sheets (adhesive layers) produced in Examples 11 and 12 above was heated using a heating apparatus (TDS) manufactured by Gerstel. A gas generated was cold-trapped by liquid nitrogen and used as a sample. The amount of alcohol formed by thermal decomposition of the alkoxysilyl group was determined by gas chromatograph mass spectrometry (GC/MS) using 6890 plus/5973N manufactured by Agilent Technologies.
Next, after storing the adhesive sheet (adhesive layer) produced in each of Examples 11 and 12 above under the environment of 25°C and 50% RH for 24 hours, a sample was produced in the same manner as above. The amount of alcohol was determined, and the maintenance ratio of the alkoxysilyl group was calculated. Specifically, it was calculated from the following relational expression.

Maintenance ratio (%) of moisture-curable component (alkoxysilyl group) =

[(Amount of alcohol obtained from GC/MS of adhesive sheet (adhesive layer) after storage under environment of 25°C and 50% RH for 24 hours)/(Amount of alcohol obtained from GC/MS of adhesive sheet (adhesive layer) immediately after production)] × 100

The results are shown in Table 1.

<Measurement of 180° peel adhesive force>

Measurement of 180° peel adhesive force was conducted in the following manner. The results are shown in Table 1.
First, the adhesive sheet of each example after the measurement of the maintenance ratio of the moisture-curable component was cut so as to have a size of a width of 20 mm and a length of 10 cm.
Next, a slate plate having a size of thickness: 3 mm, width: 30 mm and length: 125 mm was prepared from a slate standard plate, product name "JIS A5430 (FB)" (hereinafter referred to as a slate plate) manufactured by Nippon Testpanel Co., Ltd. A glossy surface of the slate plate was used. The slate plate was dried at 130°C for 1 hour, and the mass of the slate plate at this time was measured, and the mass was defined as "mass of slate plate before dipping in water".
Subsequently, the slate plate prepared was deaerated for one hour in the state of dipping in water by an ultrasonic deaerator (BRANSON 3510 manufactured by Yamato Scientific Co., Ltd.), allowed to stand for 24 hours, and then taken out of the water. The mass of the slate plate at this time was measured, and the mass was defined as "mass of slate plate after dipping and deaerating in water".
Based on the "mass of slate plate before dipping in water" and "mass of slate plate after dipping and deaerating in water" measured, water absorption ratio of the slate plate was calculated by the following expression. As a result, the water absorption ratio was 25% (% by mass).

Water absorption ratio (% by mass) of slate plate = [{(Mass of slate plate after dipping and deaerating in water) − (mass of slate plate before dipping in water)}/ (Mass of

slate plate before dipping in water)] × 100

Subsequently, water on the slate plate was wiped off, and the adhesive sheet (test piece) of each example was press-bonded and pasted to the glossy surface by one reciprocation of 2 kg roller, and the slate plate with the adhesive sheet was covered with a wrap and an aluminum foil, and then allowed to stand for 24 hours.
Subsequently, the slate plate with the adhesive sheet (test piece) adhered thereto was dipped in water, and allowed to stand at 23°C for 24 hours. Thereafter, the slate plate with the adhesive sheet (test piece) adhered thereto was taken out of the water, and 180° peel adhesive force (N/20 mm) at peel temperature: 23°C and peel rate: 300 mm/min to the slate plate was measured using a tensile tester (Technograph TG-1kN manufactured by MINEBEA).

[Table 1]

TABLE 1

| | | | Ex. 1 | Ex. 2 | Ex. 3 | Ex. 4 | Ex. 5 | Ex. 6 | E. 7 | Ex. 8 | Ec. 9 | Ex. 10 | Ex. 11 | Ex. 12 | Com. Ex. 1 | Com. Ex. 2 |
|---|---|---|---|---|---|---|---|---|---|---|---|---|---|---|---|---|
| Adhesive layer component (parts by mass) | Base polymer | Opanol N80 | 50 | 75 | 75 | 75 | 75 | | 75 | 75 | 75 | 75 | 25 | 75 | 75 | 75 |
| | | Tetrax 5T | 50 | 25 | 25 | 25 | 25 | | 25 | 25 | 25 | 25 | 75 | 25 | 25 | 25 |
| | | HV300 | 100 | 100 | 100 | 100 | 100 | | 100 | 100 | 100 | 100 | 100 | 100 | 100 | 100 |
| | | Acrylic polymer | | | | | | 100 | | | | | | | | |
| | Tackifier | T-REZ RB100 | 100 | 100 | 100 | 100 | 100 | | 100 | 100 | 100 | 100 | 100 | 100 | 100 | 100 |
| | | n-HDR | | | | | | 100 | | | | | | | | |
| | Filler | Heavy calcium carbonate | 100 | 200 | 200 | 200 | 200 | | 200 | 200 | 200 | 200 | | | 200 | 200 |
| | Water-absorbing material | KI gel | 16 | | | | | 10 | | | | | | | | |
| | Moisture-curable component | HA2000 | 16 | 34 | | | | | 15 | 34 | 34 | 34 | 34 | | | 34 | 34 |
| | | HI2000 | | | 34 | | | | | | | | | | | |
| | | D-177N | | | | 34 | | | | | | | | | | |
| | | D-178NL | | | | | 34 | | | | | | | | | |
| | | Silyl SAT1010 | | | | | | | | | | | | 5 | | |
| | | Vestplast 206 | | | | | | | | | | | 60 | | | |
| | Coloring material | SEAST 3H | 0 | 3 | 3 | 3 | 3 | | | | | | | | 3 | 3 |

EP 3 805 332 A1

(continued)

| | | | Ex. 1 | Ex. 2 | Ex. 3 | Ex. 4 | Ex. 5 | Ex. 6 | E. 7 | Ex. 8 | Ec. 9 | Ex. 10 | Ex. 11 | Ex. 12 | Com. Ex. 1 | Com. Ex. 2 |
|---|---|---|---|---|---|---|---|---|---|---|---|---|---|---|---|---|
| Substrate | Material | | Al foil | Al/PE composite film | Al oxide-deposited PET | Al-deposited PET | PET | Al foil | Al foil | Al foil | Al foil | Al foil | Al foil | Al foil | PET | Al foil |
| | Thickness ($\mu$m) | | 50 | 55 | 12 | 25 | 25 | 50 | 50 | 50 | 50 | 50 | 50 | 50 | 25 | 50 |
| | Moisture permeability (g/cm$^2$·24 hrs) | | $5\times10^{-4}$ | $1\times10^{-4}$ | $3\times10^{-1}$ | $3\times10^{-2}$ | $2\times10^{1}$ | $5\times10^{-4}$ | $5\times10^{-4}$ | $5\times10^{-4}$ | $5\times10^{-4}$ | $5\times10^{-4}$ | $5\times10^{-4}$ | $5\times10^{-4}$ | $2.4\times10^{1}$ | $5\times10^{-4}$ |
| Release liner | Material | | Al foil | Al foil | Al foil | Al foil | Al foil | Al foil | Al foil laminate film | Al-deposited PET | Al-deposited PET | Al oxide-deposited PET | Al foil | Al foil | PET | PET |
| | Thickness ($\mu$m) | | 12 | 12 | 35 | 50 | 12 | 12 | 41 | 25 | 50 | 12 | 12 | 12 | 38 | 75 |
| | Moisture permeability (g/cm$^2$·24 hrs) | | $7\times10^{-4}$ | $7\times10^{-4}$ | $3\times10^{-4}$ | $5\times10^{-4}$ | $7\times10^{-4}$ | $7\times10^{-4}$ | $1\times10^{-4}$ | $3\times10^{-2}$ | $1\times10^{-1}$ | $3\times10^{-1}$ | $7\times10^{-4}$ | $7\times10^{-4}$ | $1.5\times10^{1}$ | 8.0 |
| Maintenance ratio of moisture-curable component (%) | 40°C×90% 24 hrs | | 99 | 100 | 100 | 100 | 97 | 97 | 94 | 76 | 55 | 59 | 81 | 79 | 18 | 13 |
| | 40°C×90% 72 hrs | | 85 | 100 | 100 | 99 | 82 | 85 | | | | | | | 0 | 0 |
| 180° peel adhesive force (N/20 mm) | | | 28 | 32 | 28 | 30 | 31 | 20 | 32 | 28 | 27 | 28 | 19 | 10 | 0.1 | 0.1 |

In the adhesive sheets of Examples 1 to 12, after storage under the environment of 40°C and 90% RH for 24 hours, 55 to 100% of the moisture-curable component was maintained in an unreacted state, and even after storage for 24 hours, good 180° peel adhesive force was exhibited to a wet surface.

Moreover, in the adhesive sheets of Examples 1 to 6, even after the storage under the environment of 40°C and 90% RH for 72 hours, almost all the moisture-curable components were maintained in an unreacted state, and even after the storage, good 180° peel adhesive force was exhibited to a wet surface.

In the adhesive sheets of Comparative Examples 1 and 2, the moisture-curable component is not maintained in an unreacted state after storage under the environment of 40°C and 90% RH for 72 hours, and 180° peel adhesive force to a wet surface after storage was poor.

Although the present invention has been described by reference to the preferable embodiments, the present invention is not limited to the above-described embodiments, and various modifications and replacements can be added to the embodiments described above without departing the scope of the present invention.

This application is based on Japanese Patent Application No. 2018-102822 filed May 29, 2018, and Japanese Patent Application No. 2019-098481 filed May 27, 2019, the disclosures of which are incorporated herein by reference.

REFERENCE SIGNS LIST

| 10, 20, 30, 40: | Adhesive sheet |
| 11, 21, 31: | Substrate |
| 12, 22, 42: | Adhesive layer |
| 13: | Release liner |
| 14: | Edge protective layer |
| 32A: | First adhesive layer |
| 32B: | Second adhesive layer |
| 33A, 43A: | First release liner |
| 33B, 43B: | Second release liner |
| A: | Adhesive surface |
| B: | Back |

**Claims**

1. An adhesive sheet comprising an adhesive layer comprising an adhesive composition containing a base polymer and a moisture-curable component, wherein an adhesive surface of the adhesive sheet is peelably covered with a layer having moisture permeability of 5 $g/m^2 \cdot 24$ hrs or less.

2. The adhesive sheet according to claim 1, wherein an edge of the adhesive sheet is peelably covered with a layer having moisture permeability of 5 $g/m^2 \cdot 24$ hrs or less.

3. The adhesive sheet according to claim 1 or 2, wherein the base polymer contains a rubber-based polymer or an acrylic polymer.

4. The adhesive sheet according to any one of claims 1 to 3, wherein the moisture-curable component is at least one selected from an isocyanate compound and an alkoxysilyl group-containing polymer.

5. The adhesive sheet according to any one of claims 1 to 4, wherein the moisture-curable component is aliphatic isocyanate or alicyclic isocyanate.

6. The adhesive sheet according to any one of claims 1 to 5, wherein the adhesive composition further contains a water-absorbing material.

7. The adhesive sheet according to claim 6, wherein the water-absorbing material is a water-absorbing polymer.

8. The adhesive sheet according to any one of claims 1 to 7, wherein the layer is a release liner, and a substrate is laminated on the surface opposite the adhesive surface of the adhesive sheet.

9. The adhesive sheet according to any one of claims 1 to 7, wherein the layer is a substrate, and the adhesive sheet has a wound form.

10. The adhesive sheet according to any one of claims 1 to 7, wherein the adhesive sheet has an adhesive surface on both surfaces thereof, the layer is a release liner, and the respective adhesive surfaces are peelably covered with the layer.

11. An adhesive sheet comprising an adhesive layer, wherein an adhesive surface of the adhesive sheet is peelably covered with a release liner, a width of the release liner is wider than a width of the adhesive layer, and an edge of the adhesive layer is covered with the release liner.

12. The adhesive sheet according to claim 11, wherein the adhesive layer comprises an adhesive composition containing a base polymer and a moisture-curable component, and the release liner has moisture permeability of 5 g/m$^2$·24 hrs or less.

Fig. 1

Fig. 2

Fig. 3

(A)

(B)

(C)

Fig. 4

(A)

20

(B)

20

(C)

B

21

22

A

Fig. 5

30

33A
32A
31
32B
33B

Fig. 6

(A)

Fig. 7

## INTERNATIONAL SEARCH REPORT

International application No.

PCT/JP2019/020991

### A. CLASSIFICATION OF SUBJECT MATTER

Int.Cl. C09J7/38(2018.01)i, B32B7/06(2019.01)i, B32B27/00(2006.01)i,
C09J7/00(2018.01)i, C09J7/40(2018.01)i, C09J11/06(2006.01)i,
C09J109/00(2006.01)i, C09J133/00(2006.01)n, C09J201/10(2006.01)n

According to International Patent Classification (IPC) or to both national classification and IPC

### B. FIELDS SEARCHED

Minimum documentation searched (classification system followed by classification symbols)

Int.Cl. C09J1/00-201/10, B32B7/06, 27/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-71749 A (DAI NIPPON PRINTING CO., LTD.) 13 April 2017, claims, paragraph [0125] (Family: none) | 1, 8-10<br>1-10 |
| X<br>Y | JP 3-220283 A (HAMADA, Hideo) 27 September 1991, claims, page 3, upper right column, lines 11-15, page 3, lower left column, line 9 to lower right column, line 4, page 4, lower left column, line 16 to lower right column, line 4, page 5, lower left column, lines 13-20, fig. 1<br>& US 5200268 A, claims, column 3, lines 1-33, column 4, lines 48-57, column 5, line 61 to column 6, line 2, fig. 1 | 1-4, 8, 11-12<br>1-10 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26.07.2019 | 06.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2019/020991

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 58-171460 A (NITTO ELECTRIC INDUSTRIAL CO., LTD.) 08 October 1983, claims, page 1, right column, line 16 to page 2, upper left column, line 10, examples 1-3 (Family: none) | 1-10 |
| Y | US 2016/0257858 A1 (AVERY DENNISON CORPORATION) 08 September 2016, claims, example 3, paragraphs [0163]-[0169] & WO 2015/053807 A1 & EP 3055372 A1 & CA 2927081 A & CN 104870590 A | 1-4, 8-10 |
| Y | US 2013/0284364 A1 (COUTURIER, M.) 31 October 2013, claims, paragraph [0055] & WO 2012/061032 A1 | 1-4, 8-10 |

Form PCT/ISA/210 (continuation of second sheet) (January 2015)

## INTERNATIONAL SEARCH REPORT

| International application No. |
| --- |
| PCT/JP2019/020991 |

| **Box No. II** | **Observations where certain claims were found unsearchable (Continuation of item 2 of first sheet)** |
| --- | --- |

This international search report has not been established in respect of certain claims under Article 17 (2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| **Box No. III** | **Observations where unity of invention is lacking (Continuation of item 3 of first sheet)** |
| --- | --- |

This International Searching Authority found multiple inventions in this international application, as follows:
(Invention 1) Claims 1-10
(Invention 2) Claims 11-12

[see extra sheet]

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2019/020991

(Continuation of Box No. III)

(Invention 1) Claims 1-10
    Document 1 discloses [an adhesive sheet provided with an adhesive layer formed of an adhesive composition containing a base polymer and a moisture-curable component, wherein an adhesive surface of the adhesive sheet is separably coated with a layer having a moisture permeability of 5 $g/m^2 \cdot 24h$ or less]. Claim 1 lacks novelty in light of document 1, and thus does not have a special technical feature.
    However, claim Δ depending from claim 1 has the special technical feature wherein [an end of the adhesive sheet is separably coated with a layer having a moisture permeability of 5 $g/m^2 \cdot 24h$ or less]. Claims 3-10 have the same technical feature as claim 2. Accordingly claims 1-10 are classified as invention 1.

(Invention 2) Claims 11-12
    Claim 11 cannot be said to have the same or corresponding technical features between this claim and claim 1 classified as invention 1. Accordingly claim 11 cannot be identified as invention 1.
    Meanwhile, claim 11 has the special technical feature wherein [an adhesive surface of the adhesive sheet is separably coated with a separation liner, and the separation liner has a wider width than the adhesive layer, and covers an end of the adhesive layer]; thus this claim is classified as invention 2.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000273418 A
- JP 2018102822 A
- JP 2019098481 A